Europäisches Patentamt

European Patent Office

Office européen des brevets

(19)

(11) Publication number: **0 133 059**

**A1**

(12) # EUROPEAN PATENT APPLICATION

(21) Application number: **84305248.1**

(22) Date of filing: **02.08.84**

(51) Int. Cl.⁴: **B 65 G 25/02**

(30) Priority: **02.08.83 GB 8320838**

(43) Date of publication of application:
**13.02.85 Bulletin 85/7**

(84) Designated Contracting States:
**FR NL**

(71) Applicant: **DUFAYLITE DEVELOPMENTS LIMITED**
**Cromwell Road**
**St. Neots Cambridgeshire PE19 1QW(GB)**

(72) Inventor: **Neale, Michael Arthur**
**17, Stanhope Road**
**Bedford(GB)**

(72) Inventor: **Holt, John B.**
**Chase House Putnoe Lane**
**Bedford(GB)**

(72) Inventor: **Thwaites, Peter John**
**3, Meadow View**
**Eltisley Huntingdonshire(GB)**

(74) Representative: **Tromans, Alan**
**7 Seymour Road Finchley**
**London N3 2NG(GB)**

(54) **Delivery apparatus.**

(57) An apparatus for delivering a supply of articles of generally circular cross section to a receiving station has a feedway having a length direction and a transverse direction, a series of transverse supporting members (4) spaced apart in said length direction, a feedway base formed of flexible material and extending from said source and over said supporting members (4) to said receiving station, said base being in the form of a flexible material which extends in a slack manner over said supporting members (4), and a sweeper (12) associated with each adjacent pair of supporting members (4), each sweeper (12) being operable by actuating means to contact, from below, the section of the flexible material overlying said pair, raise said section to form a crest extending in said transverse direction and advance said crest in said length direction of said feedway and towards said receiving station.

*Fig. 4.*

- 1 -

DELIVERY APPARATUS

For the processing of a supply of articles it is frequently necessary to deliver the articles from a source to a receiving station requiring them in a regulated flow. An object of the present invention is to provide an apparatus for such delivery of articles of generally circular cross section.

In accordance with the present invention, there is provided an apparatus for delivering a supply of articles of generally circular cross section from a source of said articles to a receiving station requiring them in a regulated flow, said apparatus comprising a feedway having a length direction and a transverse direction, a series of transverse supporting members spaced apart in said length direction a feedway base formed of flexible material and extending from said source and over said supporting members to said receiving station, said base being in the form of a flexible material which extends in a slack manner over said supporting members, and a sweeper associated with each adjacent pair of supporting members, each sweeper being operable by actuating means to contact, from below, the section of the flexible material overlying said pair, raise said section to form a crest extending in said transverse direction and advance said crest in said length direction of said feedway

- 2 -

and towards said receiving station.  The motion of the actuating means may be less than, more than, or equal in amplitude, to the size of the articles fed to the receiving station.

A principal application of the apparatus is in the delivery of articles of fruit from the source for packaging at the receiving station.  Where as is normally preferred the packaging is effected by automatic or semi-automatic equipment it can be useful to have the articles delivered in a regular manner.  With the present apparatus, articles supplied to the feedway from the source are propelled over the sections by the sweepers.  The advancing crests react on the articles in contact with the flexible material.  Any further articles resting upon these crests as a result of overfeeding tend to fall back towards the source so that when they reach the receiving station they are travelling as a single layer in which they are arranged in transverse rows.  Because of this effect, the rate of supplying articles to the feedway does not require critical control.  The only requirement is to maintain an at least adequate rate of supply.

In a preferred arrangement the apparatus has a set of barriers extending in the length direction of the feedway and spaced apart in the transverse direction thereof.  The effect of these barriers is to control the number of articles accommodated in the transverse direction of the feedway and ensure that the articles are delivered to the receiving station in a regular pattern.  Having the articles so delivered is advantageous when they are to be packaged in required numbers, for example when they are to be loaded each into a complete hexagonal or boundary cell of a divider of the honeycomb type.

Such barriers may be secured, in the number required, at their ends and/or, at positions along their length, to the transverse supporting members. Where desired they may be secured to an overhead structure provided for the purpose. They may be fixed in position or mounted to rise and fall with a generally vertical motion to limit the clearance above the said feedway base. Their lower edges may be profiled as required.

The rectangular sections of flexible material may be provided as separately produced sections but are preferably integral sections of a web of the flexible material. They may be formed as a single piece of the material which extends over the length and the transverse directions of the feedway.

For simplicity of construction, the actuating means aforesaid may be a common drive operable to actuate said sweepers in phase. This common drive is conveniently provided in the form of at least one elongated rigid member having a driven end, a non-driven end and driving means for driving said driven end in a circular locus, the preferred form of driving means being a driven crank. For best results the non-driven end of the elongated rigid member is supported by a surface configured to raise it in a cyclic manner.

A primary application of the apparatus is in the packaging of apples or other fruit, or in the delivery of fruit to a grading or other processing machine. It may be employed in the packaging of other articles capable, because of a generally circular cross section, of rolling whilst being moved along the feedway. The suitability of an apparatus in accordance with the invention for use with articles having a predominantly non-circular cross section as well as generally circular cross section (e.g. pears) can be ascertained by a simple experiment.

The following description in which reference is made to the accompanying drawings is given in order to illustrate the invention. In the drawings:

Fig. 1 is a perspective showing the article - entry end of an example of a delivery apparatus provided in accordance with the invention.

Fig.2 is a perspective showing the article - delivery end of the apparatus of Fig.1.

Fig.3 shows the apparatus in plan, and

Fig.4 shows the apparatus in side elevation.

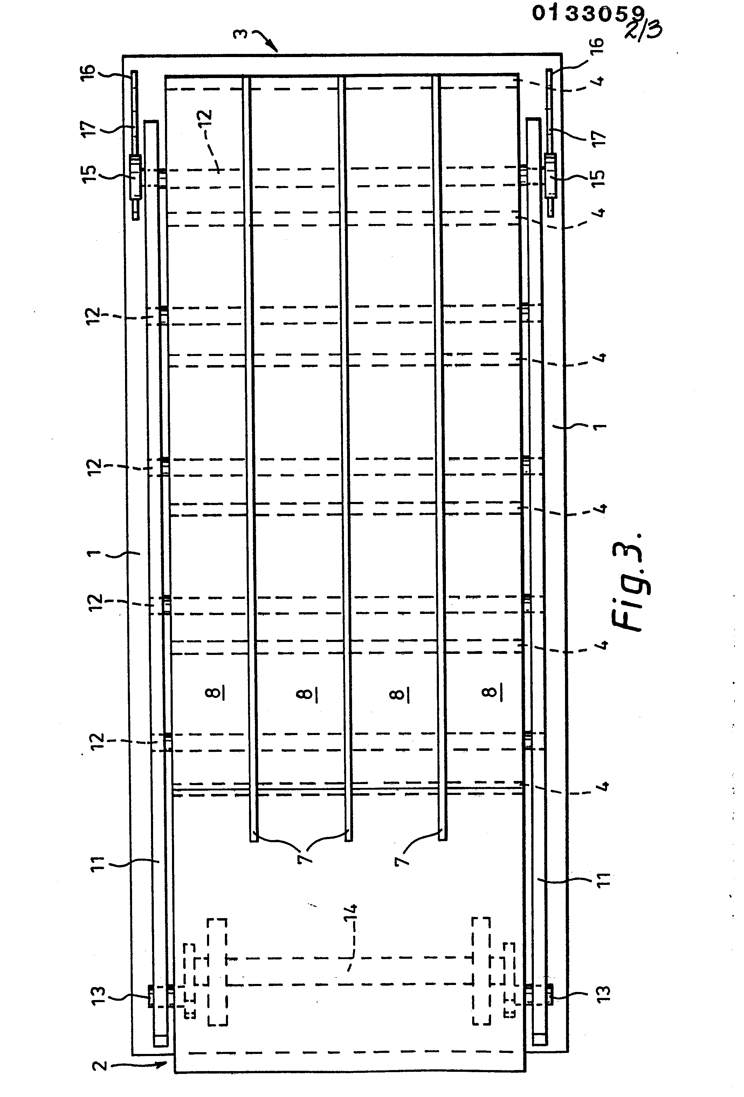

The apparatus shown in the drawings consist basically of a conveyor support 1 (Fig.3) extending from entrance end 2 to exit end 3, and a set of uniformly spaced apart transverse members 4, typically sixteen in number, which bridge the frame structure transversely, their upper edges 5 being recessed below the longitudinal upper edges 6 of the sides 11 of a moving frame.

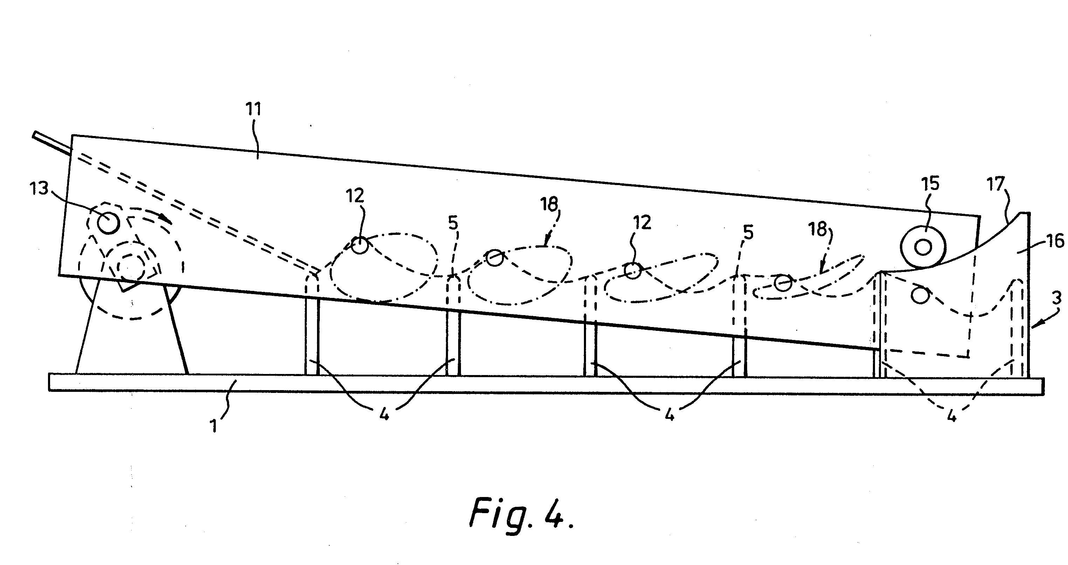

Five longitudinal members 7 divide the frame into six channels 8 extending to exit end 3 from near entrance end 2. For simplicity of illustration, only six of the members 4 and three of the members 7 are shown in Figs. 3 and 4.

A sheet of flexible material, e.g.woven fabric, extends across the frame, below members 7, from the end 3 at least back to that transverse member 4 which is nearest entrance end 2.

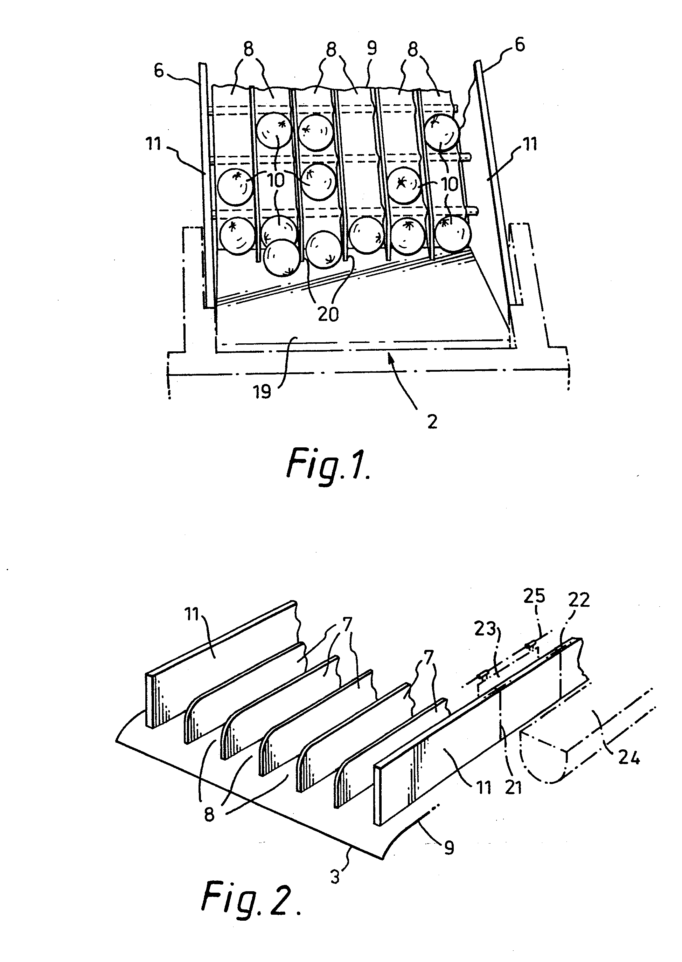

It is secured to the upper edges of members 4 at intervals greater than their spacing so that it sags deeply when loaded to provide, with members 7, a rectangular array of nesting positions for the apples or other articles 10 - see Fig. 1.

A mobile frame 11 carries an evenly spaced-apart set of sweeper bars 12 . Frame 11 is carried at the entrance end of the apparatus between a pair of rotary cranks 13 mounted on a common driven shaft 14.

Near the exit end, frame 11 bears via rollers 15 upon fixed components 16 each having an upper cam-surface 17. As cranks 13 move the entrance end of frame 11 in a rotary motion, rollers 15 are moved to-and-fro so that the exit end of the frame is given a motion around a closed cycle. Sweeper bars 12 are given a related motion. In the arrangement shown in Fig. 4, the vertical component of cam-surface 17 is less than that produced by crank 13 with the result that the loci 18 of the bars 12 depart from the circular in the direction of the exit end 3. It is found, however that this is not essential for all products and a consistent circular motion, which may be of constant amplitude, may be employed. With some products starting at the entrance end with a larger vertical motion than is required to produce a flow towards the exit end assists in establishing a regular flow from the entrance end.

The effect of the sweeper bars, is to produce equally spaced-apart ridges which travel along the apparatus carrying the product, one item in front of each ridge, in a

uniform manner. In the transverse direction uniformity of flow is achieved by the members 7. The resulting flow in a rectangular array is achieved with a tolerance of the product size which is adequate for apples over the range of grades normally encountered at a packing station.

At its entrance end, the apparatus is provided with a ramp 19, having slits 20 by which it enters between members 7. Apples piled on ramp 19, tend to be routed to form the required array.

Delivery at the exit end is in multiples of six of the articles. For cases where the number required is less than a multiple of 6, provision may be made for removing the surplus before it reaches the exit end. This can be achieved by the arrangement indicated in broken lines in Fig. 2. One of the walls 11 has a gap which is normally closed by a gate at 21 carried by a pivotal axis at 22. Swinging the gate outwardly during the return part of a crank cycle causes flap 23 to pivot about an axis at 25 and engage an article to move it sideways to be received in, and carried away by, a channel 24 for disposal or re-cycling.

Articles delivered over end 3 are so delivered in a convenient manner for packaging purposes. In some industries they can be treated as measured batches, e.g. for catering or cooking applications.

It will be understood that the embodiments of the apparatus described herein by way of example are so described for purposes of illustration only and that various departures may be made therefrom without departing from the ambit of the invention.

CLAIMS:

1.    An apparatus for delivering a supply of articles of generally circular cross section from a source of said articles to a receiving station requiring them in a regulated flow, said apparatus comprising a feedway having a length direction and a transverse direction, a series of transverse supporting members spaced apart in said length direction, a feedway base formed of flexible material and extending from said source and over said supporting members to said receiving station, said base being in the form of a flexible material which extends in a slack manner over said supporting members, and a sweeper associated with each adjacent pair of supporting members, each sweeper being operable by actuating means to contact, from below, the section of the flexible material overlying said pair, raise said section to form a crest extending in said transverse direction and advance said crest in said length direction of said feedway and towards said receiving station.

2.    An apparatus according to claim 1 having a set of barriers extending in the length direction of the feedway and spaced apart in the transverse direction thereof.

3.    An apparatus according to claim 2 in which said barriers are secured at their ends and/or at positions along their length to the transverse supporting members.

4. An apparatus according to claim 2 in which said barriers are mounted to rise and fall with a generally vertical motion to limit their clearance above said feedway base.

5. An apparatus according to any one of claims 1 to 4 in which said actuating means is a common drive operable to actuate said sweepers in phase.

6. An apparatus according to claim 5 in which said common drive is at least one elongated rigid member having a driven end, a non-driven end and driving means for driving said driven end in a circular locus.

7. An apparatus according to claim 6 in which said driving means is a driven crank.

8. An apparatus according to either of claims 6 or 7 in which said non driven-end is supported by a surface configured to raise it in a cyclic manner.

9. An apparatus according to claim 1, constructed and arranged to operate substantially as hereinbefore described and illustrated by reference to the accompanying drawings.

0133059.

1/3

Fig.1.

Fig.2.

*Fig.3.*

Fig. 4.

| Category | Citation of document with indication. where appropriate, of relevant passages | Relevant to claim | CLASSIFICATION OF THE APPLICATION (Int. Cl 4) |
|---|---|---|---|
| | **DOCUMENTS CONSIDERED TO BE RELEVANT** | | EP 84305248.1 |
| A | DE - B - 1 088 426 (HEURTEY) <br> * Column 3, lines 14-18; column 4, lines 24,25 * | 1,6,7 | B 65 G 25/02 |
| A | GB - A - 2 074 527 (LA SALLE) <br> * Page 2, lines 75-76 * | 1 | |
| A | DE - A - 2 118 125 (FEILHAUER) <br> * Claims 1,2 * | 1 | |

TECHNICAL FIELDS SEARCHED (Int. Cl.4)

B 65 G

The present search report has been drawn up for all claims

| Place of search | Date of completion of the search | Examiner |
|---|---|---|
| VIENNA | 25-10-1984 | BAUMGARTNER |